Europäisches Patentamt

(19) European Patent Office

Office européen des brevets

(11) Veröffentlichungsnummer: **0 268 624**
**B1**

(12) # EUROPÄISCHE PATENTSCHRIFT

(45) Veröffentlichungstag der Patentschrifft:
**07.02.90**

(21) Anmeldenummer: **87903305.8**

(22) Anmeldetag: **15.05.87**

(86) Internationale Anmeldenummer:
**PCT/EP 87/00259**

(87) Internationale Veröffentlichungsnummer:
**WO 87/06991 (19.11.87 Gazette 87/25)**

(51) Int. Cl.⁵: **F 16 J 15/32**

(54) DICHTUNGSANORDNUNG.

(30) Priorität: **16.05.86 DE 3616689**

(43) Veröffentlichungstag der Anmeldung:
**01.06.88 Patentblatt 88/22**

(45) Bekanntmachung des Hinweises auf die Patenterteilung:
**07.02.90 Patentblatt 90/06**

(84) Bennante Vertragsstaaten:
**AT CH DE FR GB IT LI**

(56) Entgegenhaltungen:
**DE-A-1 475 732**
**DE-A-1 940 698**
**FR-A-2 440 502**
**US-A-3 384 382**
**US-A-3 889 958**

(73) Patentinhaber: **Martin Merkel GmbH & Co. KG**
**Sanitasstrasse 17-21**
**D-2102 Hamburg 93 (DE)**

(72) Erfinder: **MÜLLER, Heinz K.**
**Aprikosenweg 2**
**D-7050 Waiblingen (DE)**

(74) Vertreter: **Glawe, Delfs, Moll & Partner Patentanwälte**
**Postfach 26 01 62 Liebherrstrasse 20**
**D-8000 München 26 (DE)**

EP 0 268 624 B1

## Beschreibung

Die Erfindung betrifft eine Dichtungsanordnung bestehend aus einer Dichtung, einem ersten Maschinenteil (beispielsweise Dichtungsgehäuse oder Kolben), der einen Raum höheren Drucks von einem Raum niedrigeren Drucks trennt und zur Aufnahme der Dichtung einen Ringraum bildet, der zur Seite des Raum niedrigeren Drucks hin von einer die Dichtung abstützenden Stirnfläche begrenzt ist, und einem zweiten Maschinenteil (beispielsweise Zylinder oder Stange), der eine mit der Dichtung zusammenwirkende, drehend und/oder axial bewegliche Gegenlauffläche bildet, wobei die einen Spalt mit der Gegenlauffläche einschließende Dichtung einen Dichtring aus nachgiebigem Werkstoff, der an einem rohrförmigen Dichtringteil eine zur Gegenlauffläche vorragende Dichtkante bildet, einen den rohrförmigen Dichtringteil auf der Seite höheren Drucks abstützenden Stützteil und einen den rohrförmigen Dichtringteil berührenden Spannring aus elastischem Werkstoff umfaßt, der von dem höheren Druck beaufschlagt ist und an der Stirnfläche des Ringraums anliegt.

Bei Dichtungen kann unter dem Einfluß hohen abzudichtenden Drucks und bei hoher Umfangsgeschwindigkeit der die Gegenlauffläche bildenden Welle eine große, auf die Gleitdichtfläche bezogene, spezifische Reibleistung im Dichtspalt zwischen den Gleitdichtflächen in Wärme umgesetzt werden. Wenn eine möglichst geringe Leckage erreicht werden soll, muß die Weite des Dichtspalts von der Größenordnung der Rauheit der den Spalt bildenden Oberflächen des Dichtrings und der Welle sein. In der Regel tritt dabei Mischreibung auf. Bei einem Dichtring aus verschleißgünstigem Kunststoff auf der Basis von PTFE muß bei höherer Flächenpressung und bei Mischreibung mit einer Reibungszahl von etwa 0,05 gerechnet werden. Wegen des bei Mischreibung undefinierbaren Verlaufs des Druckabfalls im Dichtspalt ist eine radial angepreßte Wellendichtung so auszulegen, daß die Dichtflächenpressung mindestens so groß ist wie der abzudichtende Druck. Unter diesen Bedingungen ergibt sich beispielsweise bei einem Druck von 5 MPa und einem Wellendurchmesser von 80 mm bei einer Drehzahl von 1500 U/min bereits eine spezifische Reibleistung von mindestens 150 Watt pro Quadratzentimeter der Dichtfläche. Vergleichsweise beträgt die spezifische Heizleistung einer elektrischen Kochplatte nur etwa 8 Watt pro Quadratzentimeter. Damit erweist sich die Abführung der Reibungswärme als eine wichtige Aufgabe.

Bei herkömmlichen Wellendichtungen mit einer radial angepreßten Dichtkante geringer axialer Ausdehnung ist jedoch die tatsächliche Reibleistung meist noch wesentlich größer als der oben berechnete Wert, weil in der Regel die Dichtflächenpressung wegen unzureichender hydrostatischer Entlastung der Dichtkante wesentlich größer ist als der abzudichtende Druck und somit dichtungstechnisch zu groß ist. Dies hat die Folge, daß solche Wellendichtungen mit Dichtringen aus Kunststoff unter den oben angenommenen Betriebsbedingungen wegen der Gefahr der Überhitzung der Dichtflächen nicht verwendet werden können.

Dazuhin findet bei herkömmlichen, zur Abdichtung höherer Drücke angewendeten Dichtringen wegen zu großer Radialkraft eine zu starke Abplattung der Dichtkante und damit eine unerwünschte Vergrößerung der Dichtfläche statt, so daß sich auch aus diesem Grund eine extrem große Reibleistung unter ungünstigen Wärmeabfuhrbedingungen ergibt. Die Wärmeentwicklung im Dichtspalt verursacht daher häufig den Ausfall von Wellendichtungen und begrenzt den Einsatzbereich hinsichtlich des Drucks und der Umfangsgeschwindigkeit.

Bei der eingangs beschriebenen, bekannten Dichtungsanordnung (DE-C-3 217 118, insbesondere Fig. 1 und 5) wird der vom abzudichtenden Druck herrührende Anteil der Dichtflächenpressung dadurch klein gehalten, daß die Dichtkante nahe dem niederdruckseitigen Ende des rohrförmig ausgebildeten Dichtrings angeordnet ist und dieser bis an den die Dichtkante bildenden Ringvorsprung heran von einem beispielsweise aus Metall bestehenden Stützring abgestützt wird, der die Radialkraft des Spannrings aufnimmt, der den abzudichtenden Druck auf den Dichtring überträgt, wobei der Dichtring sich unmittelbar an der niederdruckseitigen Stirnfläche des ihn aufnehmenden Ringraums abstützt. Diese Anordnung hat den Nachteil, daß der Dichtring unter Reibung an der Stirnfläche anliegt und deshalb der unvermeidlichen dynamischen Exzentrizität der Welle nur eingeschränkt folgen kann, was zur Bildung eines vergrößerten Dichtspalts und somit zu vergrößerter Leckage führt. Nachteilig ist ferner, daß die Dichtung wegen der Biegesteifigkeit des Stützrings bei der Montage nicht zusammengefaltet in den sie aufnehmenden Ringraum eingebracht werden kann und daß das den Ringraum bildende Gehäuse demnach geteilt ausgeführt werden muß.

Der Erfindung liegt daher die Aufgabe zugrunde, eine Dichtungsanordnung der eingangs genannten Art zu schaffen, bei der die Reibleistung wirksam begrenzt und dennoch der Dichtring radial beweglich ist.

Die erfindungsgemäße Lösung besteht darin, daß der Stützteil in Abstand von der Dichtkante mit dem dünnwandig ausgebildeten rohrförmigen Dichtringteil verbunden ist und mit dem Spannring über eine Stirnfläche zur Übertragung des Axialschubs zusammenwirkt, wobei der Raum höheren Drucks sowohl mit der Umfangsfläche des Spannrings als auch mit einem Spalt zwischen dem rohrförmigen Dichtringteil und der Gegenlauffläche in Verbindung steht.

Der Dichtring stützt sich über die Stirnfläche axial an dem Spannring aus Elastomer-Werkstoff ab, der zugleich als Nebenabdichtung wirkt.

Der Spannring hat gegenüber der Umfangsfläche des Rohrteils, an der er anliegt, vorzugsweise Übermaß, um auch im drucklosen Zustand eine hinreichende Dichtwirkung ausüben zu können. Sowohl der auf den Spannring einwirkende Axialschub des Stützteils als auch der direkt auf einen Teil der Oberfläche des Spannrings einwirkende Druck des abzudichtenden Mediums bewirken einen hydrostatischen Druckspannungszustand im Spannring, der zu einer zusätzlichen radialen Druckkraft auf dem Rohrteil im Sinne einer Erhöhung der Dichtflächenpressung führt. Bis zur Dichtkante hin ist der Rohrteil auch von der der Gegenlauffläche zugewandten Seite her mit dem abzudichtenden Druck belastet, wodurch sich die radial von innen und von außen auf den Rohrteil einwirkenden Druckkräfte zum Teil aufheben, nämlich im wesentlichen diejenigen Druckkräfte, die druckseitig vor der durch die Dichtkante gebildeten Ebene radial auf die Dichtung einwirken. Mit der Festlegung der axialen Lage der Dichtkante am Rohrteil hat es der Konstrukteur daher in der Hand, den verbleibenden, vom abzudichtenden Druck herrührenden Anteil der radialen Anpreßkraft der Dichtkante an die Gegenlauffläche in gewünschter Weise festzulegen. Infolge der radialen Anpreßkraft der Dichtkante an die Gegenlauffläche wird die Dichtkante abgeplattet und bildet mit der Gegenlauffläche eine Berührfläche von geringer axialer Breite. Die Abplattung der Dichtkante und damit die Größe der Reibfläche ist um so geringer, je kleiner die die Dichtkante an die Welle anpressende Radialkraft ist. Damit der erfindungsgemäßen Anordnung die resultierende Anpreßkraft auf das kleinste, dichtungstechnisch erforderliche Maß begrenzt wird, wird auch die Reibleistung in zweifacher Hinsicht verringert, nämlich erstens durch die die Verringerung der Größe der Reibfläche infolge geringerer Abplattung der Dichtkante und zweitens durch die Verringerung der in der Reibfläche wirkenden Flächenpressung.

Die radiale Beweglichkeit des Dichtrings im Bereich der Dichtkante zum Ausgleich dynamischer Exzentrizität der Stange wird dadurch ermöglicht, daß sich der aus relativ steifem Material bestehende Dichtring nicht unmittelbar und starr am Gehäuse und insbesondere der Stirnfläche des Einbauraums, sondern sozusagen schwimmend über den aus weicherem Werkstoff bestehenden Spannring abstützt. Dieser Effekt wird am besten genutzt, wenn der Dichtring im Betriebszustand ausschließlich über den Spannring mit dem ersten Maschinenteil kraftübertragend verbunden ist und im übrigen vollständig frei vom ersten Maschinenteil ist, und wenn ebenso der Spannring radial beweglich ist, der Gestalt, daß er an seiner vom Rohrteil abgewandten Umfangsfläche den ersten Maschinenteil nicht berührt. Wenn trotzdem noch eine weitere axiale Abstützung vorgesehen ist, so sollte diese mindestens in radialer Richtung elastisch nachgiebig sein, um die Relativbeweglichkeit der Dichtung nicht in Frage zu stellen, und den Zugang des abzudichtenden Drucks zum Spannring nicht behindern. Ein ggf. starrer axialer Anschlag zwischen der Dichtung und dem ersten Maschinenteil kann ausnahmsweise derart vorgesehen werden, daß er nur bei Einwirkung extremer Druckdifferenzen zur Vermeidung der Gefahr einer übermäßigen Verformung der Dichtung wirksam wird.

Der Begriff Stützteil ist gemäß seiner Funktion der Abstützung des Dichtrings am Spannring zu deuten. Unter diesem Begriff fallen daher alle solche Teile des Dichtrings, die eine zur abstützenden Anlage am Spannring geeignete Stirnfläche bilden.

Im Unterschied zu der oben erläuterten bekannten Dichtung muß der Stützteil kein vom Dichtring gesonderter Ring sein, sondern ist er zweckmäßigerweise einstückig mit diesem ausgeführt. Er kann durch eine flanschartige Verdickung gebildet sein, die ihm eine erwünschte Steifigkeit verleiht, und die eine am Spannring abstützende Stirnfläche bildet.

Die Dünnwandigkeit des Rohrteils dient dazu, ihm eine möglichst große Einbautoleranz zu verleihen, d. h., unterschiedlichen Durchmessern der Gegenlauffläche durch Verformung ohne unakzeptable Vergrößerung der in der Dichtfläche wirksamen Vorspannung nachzugeben. Je geringer die anzunehmende Einbautoleranz ist, um so dicker kann der Rohrteil ausgeführt werden. Die Dünnwandigkeit des Rohrteils kann auch hinsichtlich der Nachgiebigkeit der Dichtkante gegenüber insbesondere hochfrequenten Radialbewegungen der Gegenlauffläche vorteilhaft sein.

Vorzugsweise ist der Rohrteil zylindrisch. Seine Wanddicke beträgt dabei außerhalb des Dichtkantenbereichs vorzugsweise weniger als 1 mm, während sie an der Stelle der Dichtkante zwischen 1 und 3 mm betragen kann. Ein besonderer Vorteil der Dünnwandigkeit des Rohrteils im Dichtkantenbereich besteht darin, daß der in diesem axial nicht unterstützten Bereich vom abzudichtenden Druck auf den Dichtring ausgeübte, auf den Spannring zu übertragende Anteil des Axialschubs möglichst klein wird. Bei einer anderen vorteilhaften Ausführung nimmt der Durchmesser des Rohrteils zu seinem freien Ende hin ab, insbesondere in kegeliger Form, wobei die Übergangskante zwischen seiner Innenfläche und seiner niederdruckseitigen Stirnfläche die Dichtkante bildet.

Zweckmäßigerweise wird die Dichtkantenebene, das ist die zur Achse lotrecht stehende Ebene durch die Dichtkante, nahe der Stirnfläche des die Dichtung aufnehmenden Ringraums angeordnet, so daß der axiale Abstand zwischen der Dichtkantenebene und dem Stützteil größer ist als der axiale Abstand zwischen der Dichtkantenebene und der genannten Stirnfläche. So kann die Anpreßwirkung des abzudichtenden Drucks auf die Dichtkante so vermindert werden, daß der verbleibende Rest mit der Übermaßvorspannung der Dichtkante und des Spannrings zur sicheren Abdichtung gerade ausreicht. Dabei kann es vorkommen, daß der Rohrteil niederdruckseitig über die Ebene der Stirnfläche hinausreicht. In diesem Falle ist darauf zu achten, daß die Durchmesser des ersten Maschinenteils und des Rohrteils zur Verhinderung gegenseitiger Berührung aufeinander abgestimmt sind.

Die relative Lage der Dichtkante zu der abstützenden Stirnfläche des Einbauraums kann nicht nur durch den Abstand der Dichtkantenebene von dem Stützteil, sondern auch durch Wahl der Querschnittsform und der axialen Abmessung des Spannrings beeinflußt werden. Ferner kann die Bemessung der axialen Nachgiebigkeit des Spannrings durch Wahl seiner Querschnittsform und seines Werkstoffs in solcher Weise geschehen, daß sich der Dichtring und damit die Lage der Dichtkantenebene relativ zur abstützenden Stirnfläche bei ansteigendem Druck axial derart verschiebt, daß dadurch die Dichtfläche in erwünschter Weise bei höherem Druck zum Zweck der Minimierung der Reibleistung weiter entlastet wird und die Anpressung das dichtungstechnisch notwendige Maß nicht überschreitet. Als Spannringe werden vorzugsweise handelsübliche Elastomerdichtungen, O-Ringe, X-Ringe, Quadringe oder dergleichen verwendet.

Um die Funktion des Spannrings als Nebenabdichtung bereits im Montagezustand auch ohne Einwirkung einer abzudichtenden Druckdifferenz zu sichern, wird der Spannring zweckmäßigerweise zwischen dem Stützteil und der Stirnfläche des Ringraums durch eine Vorspannfeder eingespannt, wodurch er sich an die Stirnfläche des Ringraums dichtend anlegt. Die Vorspannfeder kann von dem Spannring selbst gebildet sein, indem die axiale Einbaulänge des Ringraums geringer ist als die entspannte Länge der Dichtung. Dabei liegt der Dichtring hochdruckseitig an einer mit dem ersten Maschinenteil verbundenen Stirnfläche an, wobei der Spannring axial elastisch zwischen der Stirnfläche des Stützteils und der niederdruckseitigen Stirnfläche des Ringraums eingespannt ist. Wirkt nun zusätzlich der Druck der abzudichtenden Flüssigkeit, so bewirkt der dadurch entstehende Axialschub eine axiale Deformation des Spannrings, wodurch sich der Dichtring von der druckseitigen Anlagefläche abhebt und nun frei ist für die gewünschte Beweglichkeit.

Die erfindungsgemäße Dichtung kann für rotierende Wellen ebenso wie für axial bewegte Stangen sowie für Maschinenteile mit kombinierter Bewegungsart verwendet werden, wobei der erste Maschinenteil von einem Gehäuse und der zweite Maschinenteil von der Welle bzw. Stange gebildet wird. Umgekehrt kann die Dichtung auch in einem inneren Maschinenteil, insbesondere einem Kolben, eingebaut sein und gegenüber einer sie umgebenden Umfangsfläche abdichten.

Das erfindungsgemäße Ziel, den Dichtungsring bzw. dessen wesentliche Teile von jeder seine radiale Beweglichkeit einschränkenden Berührung mit dem umgebenden Gehäuse zu befreien, gilt nur mit Einschränkungen für den Spannring. Dieser soll so viel Freiheit haben, daß er sich gegenüber statischer, d.h. während des Betriebs unveränderter Exzentrizität der Gegenlauffläche im Verhältnis zu der ihn abstützenden Stirnfläche einstellen kann, während er gegenüber dynamischer Radialbewegung der Gegenlauffläche infolge seiner Reibung an der Stirnfläche weitgehend festgelegt ist. An seiner Einspannung zur Erzielung der Anfangsdichtung braucht der Stützteil des Dichtrings nicht unbedingt beteiligt zu sein, da diese Einspannung bei einer vorteilhaften Ausführungsform auch durch eine der abstützenden Stirnfläche gegenüber liegende Stirnfläche des ersten Maschinenteils gebildet sein kann, die zweckmäßigerweise kegelig ist, wobei der zwischen den beiden Stirnflächen und dem Spannring eingeschlossene Raum zweckmäßigerweise über Kanäle mit dem Raum höheren Drucks verbunden ist. Dies ist nicht erforderlich, wenn der Spannring und der Abstand zwischen den Stirnflächen so bemessen ist, daß der Spannring im Betrieb von der hochdruckseitigen Stirnfläche abgehoben ist.

Zur Verhinderung des Mitdrehens der Dichtung mit dem zweiten Maschinenteil, kann eine bekannte Verdrehsicherung vorgesehen werden. Vorzugsweise sind zu diesem Zweck an dem ersten Maschinenteil mindestens zwei Vorsprünge angebracht, die mit Spiel in entsprechende Ausnehmungen des Dichtrings eingreifen.

Um im Falle einer Wellendichtung die Reibungswärme von den Dichtflächen bei möglichst niederer Temperatur effektiv abzuführen, können an der Dichtung in an sich bekannter Weise Elemente angebracht werden, die eine intensive Flüssigkeitsströmung und einen Flüssigkeitsaustausch an den Dichtflächen bzw. an den daran angrenzenden Flächen bewirken. Dies kann zweckmäßigerweise dadurch bewerkstelligt werden, daß in einem Teilbereich zwischen dem Stützteil des Dichtrings und der Gegenlauffläche der Spalt kleiner ist als der Spalt zwischen dem Rohrteil und der Gegenlauffläche, wobei der Dichtring im Bereich des engeren Spalts mehrere schräg zur Rotationsachse angeordnete, wechselnd rechts- und linkssteigend ausgeführte Nuten enthält, so daß bei Rotation der Gegenlauffläche infolge der Schleppströmung ein abwechselndes Zu- und Abströmen von abzudichtender Flüssigkeit in den unmittelbar an die Dichtflächen angrenzenden, von dem Spalt zwischen dem Rohrteil und der Gegenlauffläche gebildeten Ringraum erfolgt. Unabhängig von der Art der Bewegung der Gegenlauffläche wird die Dichtkante zweckmäßigerweise so gestaltet, daß im Längsschnitt der Winkel zwischen der den hochdruckseitigen Teil der Dichtkante bildenden Mantellinie und der Gegenlauffläche größer ist als der Winkel zwischen der den niederdruckseitigen Teil der Dichtkante bildenden Mantellinie und der Gegenlauffläche.

Die Erfindung wird im folgenden anhand der Zeichnung näher erläutert, die vorteilhafte Ausführungsbeispiele schematisch veranschaulicht. Es zeigen:

Fig. 1 eine erste Ausführungsform einer Wellen- oder Stangendichtung mit zylindrischem Rohrteil
Fig. 2 eine Wellen- oder Stangendichtung mit kegeligem Rohrteil
Fig. 3A bis 3C eine zweite Ausführungsform einer Wellen- oder Stangendichtung mit zylindrischem Rohrteil in drei verschiedenen Funktionsstadien, und
Fig. 4 eine Kolbendichtung

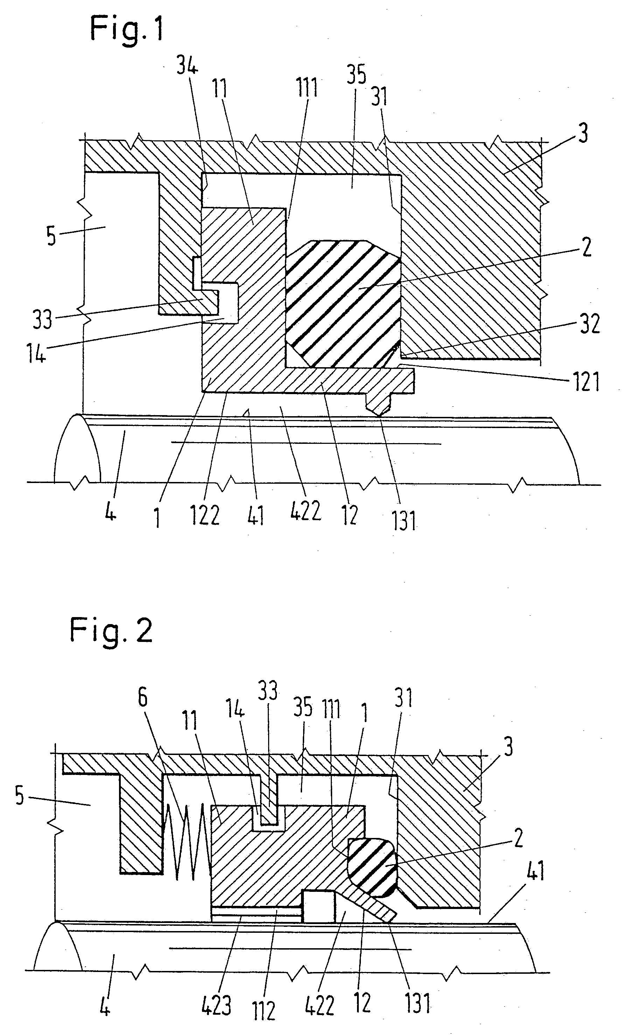

Fig. 1 zeigt eine erfindungsgemäße Dichtungsanordnung mit dem Dichtring 1, bestehend aus dem Stützteil 11 und dem einstückig damit verbundenen zylindrischen Rohrteil 12. Der Dichtring besteht aus zähelastischem oder steifem Kunststoff wie modifiziertem Polytetrafluorethylen. Um den Rohrteil 12 herum ist der Spannring 2 aus gummielastischem Werkstoff angeordnet, der wesentlich weicher ist als der des Dichtrings. Er ist zwischen die Stirnfläche 111 des Stützteils 11 und die radial verlaufende Stirnfläche 31 des die Dichtung aufnehmenden Ringraums 35 in dem den ersten Maschinenteil bildenden Gehäuse 3 dadurch eingespannt, daß der Stützteil 11 im dargestellten, druckfreien Montagezustand an der hochdruckseitigen Stirnfläche 34 des Ringraums 35 anliegt, die der Stirnfläche 31 gegenüber liegt. Der Rohrteil 12 weist auf seiner der Welle 4 zugewendeten Seite in der Nähe seines niederdruckseitigen Endes einen Ringvorsprung auf, der die Dichtkante 131 bildet, die an die die Gegenlauffläche bildende Oberfläche 41 der Welle angepreßt ist. Die Anpressung entsteht durch ein Untermaß des Dichtrings gegenüber der Wellenoberfläche 41 und/oder eine Vorspannung des Spannrings 2. Zwischen dem Rohrteil 12 und dem Stützteil 11 einerseits und der Welle 4 andererseits befindet sich ein Spalt 422, der niederdruckseitig von der Dichtkante 131 begrenzt wird. In dem Spalt 422 wirkt der Druck in dem Raum 5 höheren Drucks und belastet den Rohrteil 12 von innen her. Weiterhin wirkt der Druck der abzudichtenden Flüssigkeit (in der Zeichnung durch Punktierung angedeutet) von außen auf den Spannring 2, durch den sich der Druck fortpflanzt und auf den Außenmantel des Rohrteils 12 übertragen wird.

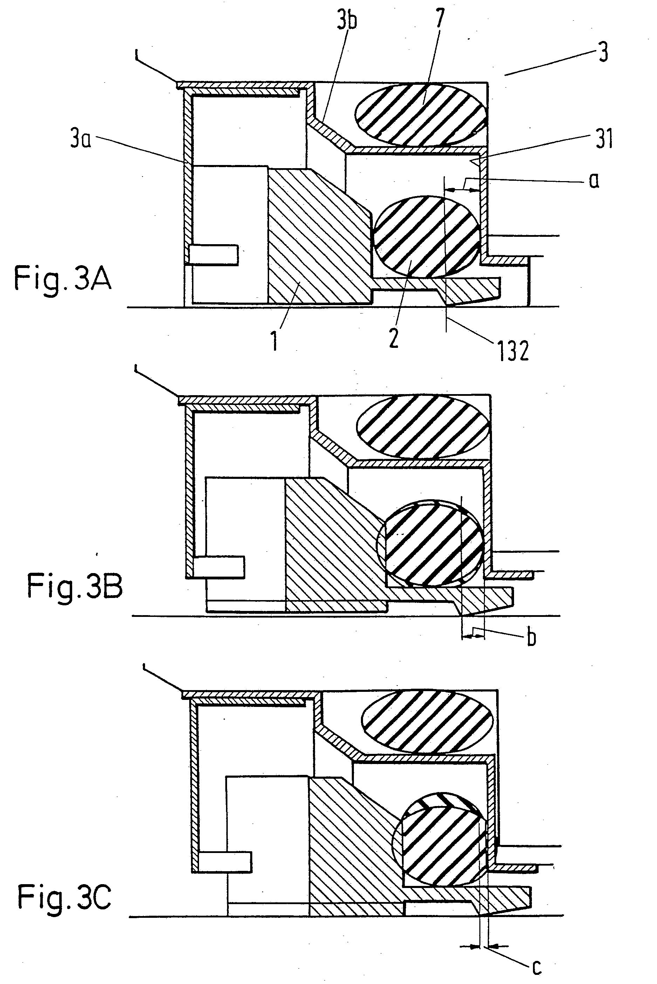

Die zwischen der Dichtkante 131 und der Wellenoberfläche 41 wirkende Radialkraft setzt sich vornehmlich aus zwei Komponenten zusammen, nämlich erstens aus der Vorspannkraft, die bei der anfänglichen Ausweitung der Dichtkante um das Fertigungsübermaß gegenüber dem Wellendurchmesser entsteht, sowie der Vorspannkraft des Spannrings 2 und zweitens aus der Differenz der von außen und von innen auf das Rohr einwirkenden Druckkräfte. Da der niedrige Druck in dem schmalen Ringbereich zwischen der Dichtkantenebene und der Stirnfläche 31 wirkt und nur in diesem Bereich die radial von außen bzw. von innen auf den Rohrteil 12 wirkenden Drücke nicht ausgeglichen sind, ist es nur die in diesem Bereich wirkende Druckdifferenz, die die zweite genannte Kraftkomponente bestimmt. Weitere Einzelheiten werden weiter unten unter Bezugnahme auf Fig. 3 erläutert.

Bei der Betrachtung der Fig. 1 wird klar, daß die aus dem Dichtring 1 und dem Spannring 2 bestehende Dichtung weitgehend frei beweglich schwimmend in dem Gehäuse 3 angeordnet ist, sobald sie sich unter der Einwirkung des Differenzdrucks von der Stirnfläche 34 gelöst hat und daher sowohl statischen als auch dynamischen Radialbewegungen der Welle 4 nachzugeben vermag. Von Massenkräften abgesehen, sind es nur die geringen elastischen Kräfte des Spannrings 2, die einer solchen Ausgleichsbewegung entgegenstehen können. In diesem Zusammenhang sei vermerkt, daß der in die Bohrung 32 des Gehäuses 3 eintauchende Abschnitt 121 des Rohrteils 12 einen in solchem Maße geringeren Durchmesser als die Bohrung 32 aufweist, daß eine hinreichende radiale Beweglichkeit des Dichtrings 1 ermöglicht ist. Um das Mitdrehen des Dichtrings zu verhindern, greifen mit dem Gehäuse 3 verbundene Vorsprünge 33 in Ausnehmungen 14 des Dichtring 1 ein.

Fig. 2 zeigt eine erfindungsgemäße Dichtungsanordnung, deren Dichtring 1 aus dem Stützteil 11 und einem kegeligen Rohrteil 12 einstückig aus Kunststoff besteht. Zwischen die Stirnfläche 111 des Stützteils und die Stirnfläche 31 des die Dichtung aufnehmenden Ringraums 35 ist der Spannring 2 dadurch eingespannt, daß der Stützteil auf seiner dem Raum 5 höheren Drucks zugewandten Seite von einer vorgespannten Feder 6 belastet ist. Die Dichtkante 131 des Rohrteils 12 wird durch die Übergangskante von dessen Innenfläche und Stirnfläche gebildet. Zwischen dem Rohrteil und der Welle 4 befindet sich ein Spalt 422, in dem die im Raum 5 höheren Drucks befindliche, abzudichtende Flüssigkeit bis zur Dichtkante eindringt und mit ihrem Druck den Rohrteil von innen belastet. Der Druck der abzudichtenden Flüssigkeit wirkt weiterhin von außen auf den Spannring 2 aus Elastomer-Werkstoff ein, durch den sich der Druck fortpflanzt und dadurch auf den Außenmantel des Rohrteils 12, an dem der Spannring anliegt, übertragen wird. Zwischen einem Teil des Stützteils 11 und der Wellenoberfläche ist der Spalt 423 verengt und enthält die Stützteiloberfläche schräg zur Wellenachse verlaufenden Nuten 112. Zur Verhinderung des Mitdrehens des Dichtrings greifen mit dem Gehäuse 3 verbundene Vorsprünge 33 in Ausnehmungen 14 des Dichtrings ein.

Gemäß Fig. 3A bis C ist die von dem Dichtring 1 und dem Spannring 2 gebildete Dichtung als einbaufertige Dichtungseinheit in einem von zwei ineinander gepreßten Blechteilen 3a und 3b gebildeten Dichtungsgehäuse enthalten, das in eine entsprechende Bohrung des Gehäuses 3 eingesetzt ist. Das Dichtungsgehäuse 3a, 3b ist gegenüber dem Gehäuse durch einen Elastomer-O-Ring 7 abgedichtet.

In Fig. 3A ist die Anordnung im drucklosen Montagezustand dargestellt. Der Dichtring 1 liegt an dem Blechteil 3a an, wobei die Abmessungen so gewählt sind, daß der Spannring 2 sowohl radial als auch axial leicht vorgespannt ist. Die Dichtkantenebene 132 hat von der Stirnfläche 31 den Abstand a.

Die Fig. 3B zeigt ein Betriebszustand, bei dem die abzudichtende Flüssigkeit einen mittleren Druck aufweist. Der Dichtring hat sich vom Blechteil 3a wegbewegt und preßt infolge des von dem höheren Druck auf ihn ausgeübten Axialschubs den Spannring 2 stärker zusammen. Dadurch hat sich die Dichtkantenebene verschoben, und ihr Abstand b von der Stirnfläche 31 ist nun geringer als der Wert a im drucklosen Zustand. Infolgedessen ist die von dem abzudichtenden Druck erzeugte Komponente der auf die Dichtkante einwirkenden Radialkraft geringer als diejenige, die bei gleichem Druck aber axial starrer Lagerung des Dichtrings aufträte. Fig. 3C zeigt schließlich den Zustand bei einem hohen abzudichtenden Druck. Der Spannring 2 ist noch weiter zusammengepreßt und die Dichtkantenebene hat sich mit entlastender Wirkung noch weiter zur Niederdruckseite hin verschoben so daß c < b < a ist.

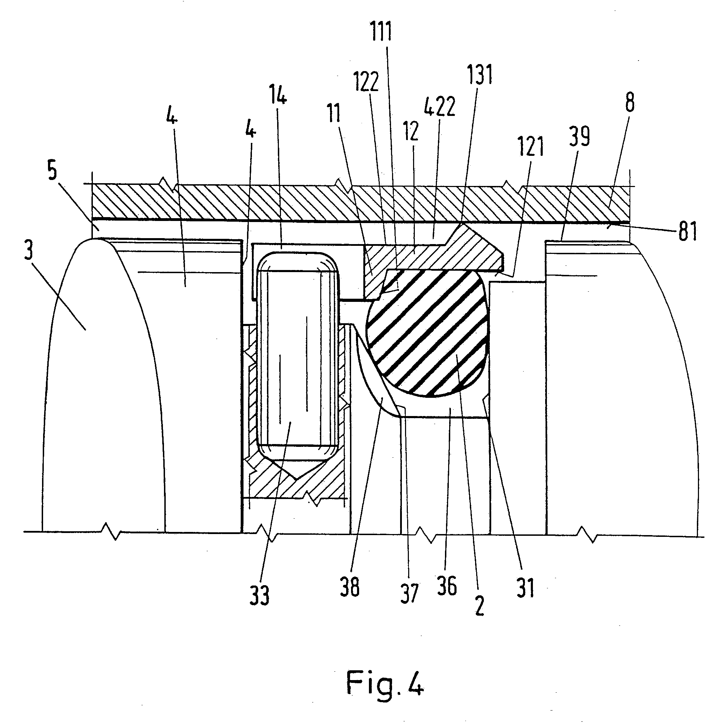

Fig. 4 zeigt eine im Kolben 3 als erstem Maschinenteil angeordnete Dichtung, die von dem Dichtungsring 11, 12 und dem Spannring 2 gebildet ist. Im Verhältnis zu den zuvor erläuterten Beispielen ist der Stützteil 11 des Dichtungsrings radial reduziert. Dies ist möglich, weil wegen des Ausgleichs der innen- und außenseitig auf den Dichtring wirkenden Drücke eine radiale Stützwirkung kaum erforderlich ist. Es genügt eine solche radiale Ausdehnung der Stirnfläche 111 des Stützteils 11, daß noch eine hinreichende axiale Abstützung des Dichtrings an den Spannring 2 stattfinden kann.

Der Spannring 2 ist im druckfreien Montagezustand zwischen der Stirnfläche 31 des Einbauraums 36 und der dieser gegenüberliegenden, kegeligen Stirnfläche 37 sowie der Innenfläche 121 des Rohrteils 12 so eingespannt, daß sich eine hinreichend dichte Anlage an der Stirnfläche 31 und der Innenfläche 121 des Rohrteils 12 ergibt. Damit der höhere Druck, wie gepunktet in der Zeichnung angedeutet, auch die Innenumfangsfläche des Spannrings 2 in dem von den Stirnflächen 31, 37 und dem Spannring 2 begrenzten Raum 46 erreichen kann, sind Kanäle 38 vorgesehen. Der Dichtring ist durch einen Stift 33, der in eine Ausnehmung 14 des Stützteils 11 eingreift, gegen Drehung im Kolben 3 gesichert. Die Gegenlauffläche 81 der Anordnung wird von einem Zylinder 8 gebildet, der in diesem Fall den zweiten Maschinenteil bildet. Im übrigen kann bezüglich Aufbau und Funktion dieser Anordnung die Beschreibung von Fig. 1 unter Verwendung gleicher Bezugziffern herangezogen werden.

**Patentansprüche**

1. Dichtungsanordnung bestehend aus einer Dichtung, einem ersten Maschinenteil (3), der einen Raum (5) höheren Drucks von einem Raum niedrigeren Drucks trennt und zur Aufnahme der Dichtung einen Ringraum (35) bildet, der niederdruckseitig von einer die Dichtung abstützenden Stirnfläche (31) begrenzt ist, und einem zweiten Maschinenteil (4, 8) der eine drehend und/oder axial relativ bewegliche Gegenlauffläche bildet, wobei die einen Spalt (422) mit der Gegenlauffläche (41) einschließende Dichtung einen Dichtungsring (1) aus nachgiebigem Werkstoff, der an einem rohrförmigen Dichtringteil (12) eine zur Gegenlauffläche vorragende Dichtkante (131) bildet, einen den rohrförmigen Dichtringteil (12) auf der Seite höheren Drucks abstützenden Stützteil (11) und einen den rohrförmigen Dichtringteil (12) berührenden Spannring (2) aus elastischem Werkstoff umfaßt, der von dem höheren Druck beaufschlagt ist und an der Stirnfläche (31) des Ringraums (35) anliegt, dadurch gekennzeichnet, daß der Stützteil (11) in Abstand von der Dichtkante (131) mit dem dünnwandig ausgebildeten, rohrförmigen Dichtringteil (12) verbunden ist und mit dem Spannring über eine Stirnfläche (111) zur Übertragung des Axialschubs zusammenwirkt, wobei der Raum (5) höheren Drucks sowohl mit der Umfangsfläche des Spannrings (2) als auch mit einem Spalt (422) zwischen dem rohrförmigen Dichtringteil (12) und der Gegenlauffläche (41) in Verbindung steht.

2. Dichtungsanordnung nach Anspruch 1, dadurch gekennzeichnet, daß der Dichtring (1) im Betriebszustand mit dem ersten Maschinenteil (3) ausschließlich über den Spannring (2) kraftübertragend verbunden ist.

3. Dichtungsanordnung nach Anspruch 1 oder 2, dadurch gekennzeichnet, daß der Spannring (2) zwischen den dem Stützteil (11) und der Stirnfläche (31) des Ringraums (35) durch eine Vorspannfeder (6) eingespannt ist.

4. Dichtungsanordnung nach Anspruch 3, dadurch gekennzeichnet, daß die Vorspannfeder (6) von dem Spannring (2) gebildet ist, in dem die axiale Einbaulänge des Ringraums (35) geringer ist als die entspannte Länge der Dichtung.

5. Dichtungsanordnung nach einem der Ansprüche 1 bis 4, dadurch gekennzeichnet, daß der axiale Abstand zwischen der Dichtkantenebene (132) und der Stirnfläche (111) des Stützteils (11) größer ist als der Abstand zwischen der Dichtkantenebene (132) und der Stirnfläche (31) des Ringraums (35).

6. Dichtungsanordnung nach einem der Ansprüche 1 bis 5, dadurch gekennzeichnet, daß der Spannring (2) ein Elastomer-Dichtring ist, der im montierten, druckfreien Zustand mit Vorspannung an dem rohrförmigen Dichtringteil (12) anliegt.

7. Dichtungsanordnung nach einem der Ansprüche 1 bis 6, dadurch gekennzeichnet, daß der rohrförmige Dichtringteil (12) zylindrisch ist.

8. Dichtungsanordnung nach einem der Ansprüche 1 bis 6, dadurch gekennzeichnet, daß der Durchmesser des rohrförmigen Dichtringteils (12) zu dessen freiem Ende hin abnimmt.

9. Dichtungsanordnung nach Anspruch 8, dadurch gekennzeichnet, daß die Dichtkante (131) gebildet ist von der Kante zwischen der Innenfläche und der niederdruckseitigen Stirnfläche des rohrförmigen Dichtringteils (12).

10. Dichtungsanordnung nach einem der Ansprüche 1 bis 9, dadurch gekennzeichnet, daß der die Dichtung aufnehmende Ringraum (35) eine der niederdruckseitigen Stirnfläche (31) gegenüber liegende, den Spannring (2) im druckfreien Zustand gegen die niederdruckseitige Stirnfläche (31) spannende Stirnfläche (37) aufweist.

11. Dichtungsanordnung nach Anspruch 10, dadurch gekennzeichnet, daß die der niederdruckseitigen Stirnfläche (31) gegenüber liegende Stirnfläche (37) kegelig ist.

12. Dichtungsanordnung nach Anspruch 10 oder 11, dadurch gekennzeichnet, daß der von den beiden Stirnflächen (31, 37) und dem Spannring (2) begrenzte Raum (36) mit dem Raum (5) höheren Drucks in Verbindung steht.

13. Dichtungsanordnung nach einem der Ansprüche 1 bis 12, dadurch gekennzeichnet, daß der Dichtring (1) an seiner der Gegenlauffläche (41) gegenüber liegenden Fläche Flüssigkeitsförderelemente (112) aufweist.

## Claims

1. A sealing assembly comprising a seal, a first machine part (3) which separates a chamber (5) at relatively high pressure from a chamber at relatively low pressure and which, to accommodate the seal, forms an annular chamber (35) which on the low-pressure side is bounded by an end face (31) supporting the seal, and a second machine part (4, 8) which defines a rotating and/or axially relatively movable counter surface, wherein the seal surrounding a clearance (422) with the counter surface (41) comprises a sealing ring (1) of flexible material which on a tubular sealing ring part (12) forms a sealing edge (131) projecting towards the counter surface, a support part (11) supporting the tubular sealing ring part (12) on the high-pressure side and a clamping ring (2) of resilient material which is in contact with the tubular sealing ring part (12), which is acted upon by the relatively high pressure and against which the end face (31) of the chamber (35) is applied, characterised in that at a distance from the sealing edge (131) the support part (11) is connected to the thin-walled tubular sealing ring part (12) and co-operates with the clamping ring via an end face (111) for transmitting the axial thrust, wherein the high-pressure chamber (5) is in communication both with the peripheral surface of the clamping ring (2) and with a clearance (422) between the tubular sealing ring part (12) and the counter surface (41).

2. A sealing assembly according to Claim 1, characterised in that in the operative position the sealing ring (1) is connected in force-transmitting manner with the first machine part (3) exclusively via the clamping ring (2).

3. A sealing assembly according to Claim 1 or 2, characterised in that the clamping ring (2) is clamped by a preloading spring (6) between the support part (11) and the end face (31) of the annular chamber (35).

4. A sealing assembly according to Claim 3, characterised in that the preloading spring (6) is formed by the clamping ring (2), in which the axial insertion length of the annular chamber (35) is smaller than the relaxed length of the seal.

5. A sealing assembly according to any one of Claims 1 to 4, characterised in that the axial distance between the sealing edge plane (132) and the end face (111) of the support part (11) is greater than the distance between the sealing edge plane (132) and the end face (31) of the annular chamber (35).

6. A sealing assembly according to any one of Claims 1 to 5, characterised in that the clamping ring (2) is an elastomeric sealing ring which, in the installed pressureless condition, is applied under preloading against the tubular sealing ring part (12).

7. A sealing assembly according to any one of Claims 1 to 6, characterised in that the tubular sealing ring part (12) is cylindrical.

8. A sealing assembly according to any one of Claims 1 to 6, characterised in that the diameter of the tubular sealing ring part (12) decreases towards its free end.

9. A sealing assembly according to Claim 8, characterised in that the sealing edge (131) is formed by the edge between the inner surface and the end face of the tubular sealing ring part (12) on the low-pressure side.

10. A sealing assembly according to any one of Claims 1 to 9, characterised in that the annular chamber (35) accommodating the seal has an end face (37) lying opposite the end face (31) on the low-pressure side and clamping the clamping ring (2) in the pressureless condition against the end face (31) on the low-pressure side.

11. A sealing assembly according to Claim 10, characterised in that end face (37) lying opposite the end face (31) on the low-pressure side is conical.

12. A sealing assembly according to Claim 10 or 11, characterised in that the chamber (36) bounded by the two end faces (31, 37) and the clamping ring (2) is in communication with the chamber (5) at relatively high pressure.

13. A sealing assembly according to any one of Claims 1 to 12, characterised in that on its surface lying opposite the counter surface (41) the sealing ring (1) has fluid-conveying elements (112).

**Revendications**

1. Dispositif d'étanchéité constitué par une garniture, une première pièce de machine (3), qui sépare une chambre (5) à pression plus élevée d'une chambre à pression moins élevée et forme pour recevoir la garniture un espace annulaire (35), qui est limité du côté basse pression par une face frontale (31) servant d'appui à la garniture, et une deuxième pièce de machine (4, 8) qui constitue une surface antagoniste rotative et/ou mobile axialement relativement, la garniture qui délimite un espace (422) avec la surface antagoniste (4I) comprenant: une bague d'étanchéité (1) en matière flexible, qui comporte sur une partie tubulaire (12) de la bague d'étanchéité une arête d'étanchéité (131) s'avançant jusqu'à la surface antagoniste; une partie support (11) de la partie tubulaire (12) de la bague d'étanchéité du côté de la pression la plus élevée; et une bague de maintien (2) en matière élastique qui est en contact avec la partie tubulaire (12) de la bague d'étanchéité, qui est exposée à la pression la plus élevée et s'appuie sur la face frontale (31) de l'espace annulaire (35), caractérisé en ce que la partie support (11) est réunie, à une certaine distance de l'arête d'étanchéité (131), à la partie tubulaire à paroi mince (12) de la bague d'étanchéité et coopère avec la bague de maintien par l'intermédiaire d'une face frontale (111) pour transmettre la poussée axiale, la chambre (5) de pression plus élevée étant associée non seulement à la surface périphérique de la bague de serrage (2), mais aussi à un espace (422) aménagé entre la partie tubulaire (12) d'étanchéité et la surface antagoniste (41).

2. Dispositif d'étanchéité selon la revendication 1, caractérisé en ce que la bague d'étanchéité (1), en état de fonctionnement, est associée, en assumant une transmission de force, à la première pièce de machine (3) exclusivement au moyen de la bague de maintien (2).

3. Dispositif d'étanchéité selon la revendication 1 ou 2, caractérisé en ce que la bague de maintien (2) est montée entre la partie support (11) et la face frontale (31) de l'espace annulaire (35) au moyen d'un ressort de précontrainte (6).

4. Dispositif d'étanchéité selon la revendication 3, caractérisé en ce que le ressort de précontrainte (6) est constitué par la bague de maintien (2), du fait que la longueur totale axiale de l'espace annulaire (35) est inférieure à la longueur détendue de la garniture.

5. Dispositif d'étanchéité selon l'une des revendications 1 à 4, caractérisé en ce que la distance axiale entre le plan (132) de l'arête d'étanchéité et la face frontale (111) de la pièce support (11) est supérieure à la distance entre le plan (132) de l'arête d'étanchéité et la face frontale (31) de l'espace annulaire (35).

6. Dispositif d'étanchéité selon l'une des revendications 1 à 5, caractérisé en ce que la bague de maintien (2) est une bague d'étanchéité en élastomère qui à l'état monté, sans compression, s'appuie avec précontrainte sur la partie tubulaire (12) de la bague d'étanchéité.

7. Dispositif d'étanchéité selon l'une des revendications 1 à 6, caractérisé en ce que la partie tubulaire (12) de la bague d'étanchéité est cylindrique.

8. Dispositif d'étanchéité selon l'une des revendications 1 à 6, caractérisé en ce que le diamètre de la partie tubulaire (12) de la bague d'étanchéité décroît vers son extrémité libre.

9. Dispositif d'étanchéité selon la revendication 8, caractérisé en ce que l'arête d'étanchéité (131) est constituée par l'arête entre la face intérieure et la face frontale du côté basse pression de la partie tubulaire (12) de la bague d'étanchéité.

10. Dispositif d'étanchéité selon l'une des revendications 1 à 9, caractérisé en ce que l'espace annulaire (35) recevant la garniture présente une face frontale (37) située en regard de la face frontale (31) du côté basse pression qui maintient la bague de maintien (2) à l'état sans compression contre la face frontale (31) du côté basse pression.

11. Dispositif d'étanchéité selon la revendication 10, caractérisé en ce que la face frontale (37) située en regard de la face frontale (31) du côté basse pression est conique.

12. Dispositif d'étanchéité selon la revendication 10 ou 11, caractérisé en ce que l'espace (36) délimité par les deux faces frontales (31, 37) et par la bague de serrage communique avec la chambre à pression plus élevée (5).

13. Dispositif d'étanchéité selon l'une des revendications 1 à 12, caractérisé en ce que la bague d'étanchéité (1) présente des éléments de transport de liquide (112) sur sa surface située en regard de la surface antagoniste (41).

Fig.1

Fig.2

Fig.3A

Fig.3B

Fig.3C

Fig. 4